Europäisches Patentamt

(19) European Patent Office

Office européen des brevets

(11) Publication number: **0 141 531**
A2

# (12) EUROPEAN PATENT APPLICATION

(21) Application number: 84306690.3

(22) Date of filing: 01.10.84

(51) Int. Cl.⁴: **B 29 C 45/18**
B 29 C 45/30, B 29 C 45/03
B 29 C 45/76

(30) Priority: 07.10.83 GB 8326926

(43) Date of publication of application:
15.05.85 Bulletin 85/20

(84) Designated Contracting States:
DE FR GB IT NL

(71) Applicant: Harper, Alan
Greenhill Works Delaware Road
Gunnislake Cornwall PL18 9AS(GB)

(72) Inventor: Harper, Alan
Greenhill Works Delaware Road
Gunnislake Cornwall PL18 9AS(GB)

(54) Method of, and apparatus for, injecting liquid resin.

(57) To enable liquid resin to be fed into a mould 25 from a container 11 the interior of the charged container is pressurised and a nozzle 16 on an outlet 17 of the container is positioned in a mould sprue 26. A valve 18 in the outlet 17 is opened to enable mixture to be driven into the mould 25 from the container 11. The valve 18 is closed when the mixture is sensed to have reached a remote part of the mould 25 or when mixture is no longer present in the outlet 17. Closure of the valve is accomplished by a regulator 20 acting in response to a signal from a sensor 22 disposed in the mould remotely from the nozzle 16 or from a sensor 29 in the outlet 17.

EP 0 141 531 A2

Croydon Printing Company Ltd

METHOD OF, AND APPARATUS FOR, INJECTING LIQUID RESIN


This invention relates to a method of, and apparatus for, injecting liquid resin.

Resin injection is a low pressure closed mould process used in the production of reinforced plastics components. The process makes use of a matched pair of moulds into which fibre reinforcement (often glass fibre) is introduced. With the moulds clamped together a cold setting catalysed resin mixture including such additives as are necessary is injected under low pressure through one or more inlets (or "sprues") in the mould halves. Once the resin has hardened sufficiently the moulds can be opened and the cast component removed from the mould.

According to a first aspect of the present invention there is provided a method of injecting liquid resin into a mould (25) by way of a nozzle (16) positioned to feed the mould by way of a mould sprue (26) characterised by the steps of:

(i)   charging a pressurisible container (11) having an outlet nozzle (16) closed by a valve (18) with a given amount of a mixture of resin and such additives (such as catalyst) as may be required ;

(ii)  pressurising the interior of the charged container (11);

(iii) disposing the charged container (11) so that the nozzle (16) is positioned to feed a mould cavity (28) by way of a mould sprue (26);

(iv)    causing the valve (18) to open to enable mixture
        to pass into the sprue (26) by way of the nozzle
        (16) under the action of a pressure differential
        existing between container interior and nozzle
        outlet; and

(v)     closing the valve (18) when the mixture is
        observed or otherwise detected as filling the
        mould (25).

According to a first preferred version of the first aspect
of the present invention the method is further
characterised in that the step of closing the valve (18) is
achieved by:

(i)     positioning a mixture sensor (22) at a point in
        the mould (25) remote from the sprue (26); and

(ii)    feeding a signal output from the sensor (22) to
        a regulator adapted to operate the valve (18) so
        as to cause closure of the valve when the sensor
        (22) detects the presence of mixture at the
        point in the mould (25) remote from the sprue
        (26).

According to a second preferred version of the first aspect
the method is characterised in that the step of closing the
valve (18) is achieved by:

(i)     positioning a mixture sensor (29) at a point in
        the outlet (17) between the valve (18) and the
        container (11); and

(ii)) feeding a signal output from the sensor (29) to a regulator (20) adapted to operate the valve (18) so as to cause closure of the valve (18) when the sensor (29) detects the absence of mixture at the point in the nozzle (16) between the valve (18) and the container (11).

According to a second aspect of the present invention there is provided apparatus for injecting liquid resin into a mould (25) by way of a nozzle (16) characterised by a pressurisble container (11), with pressurising inlet (12) for pressurising its interior in a controlled manner, having an outlet (17) equipped with the nozzle (16), the passage of mixture through the nozzle (16) being regulatable by way of a valve (18) positioned between the container (11) and the nozzle (16).

According to a preferred version of the second aspect of the present invention the apparatus of the second aspect is further characterised by the provision of:

(i)    a sensor (22, 29) for mixture dispensed from the container (11);

(ii)   a regulator (20) for operating the valve (18) between open and closed positions; and

(iii)  a signal transmitter (24) linking the sensor (22, 29) to the regulator (20) whereby the regulator (20) is enabled to operate the valve (18) in dependence on the output of the sensor (22, 29).

Typically the sensor (22) is positioned in a mould with which the apparatus is used to cause the regulator to operate the valve when the sensor detects the presence of the material at a point remote from the sprue of the mould. Alternatively the sensor (29) is positioned between the valve and the nozzle to cause the regulator to operate the valve when the sensor detects the absence of material following completion of discharge or a break in flow.

Preferably the sensor, regulator and valve are air operated and controlled.

To provide for ready operation of the apparatus according to the invention in a production environment the container, regulator, sensor and signal transmitting means are incorporated into a single unit. Typically with such a unit its weight would be sustained by a cable and supplies of material and compressed air are fed to the unit by flexible cables.

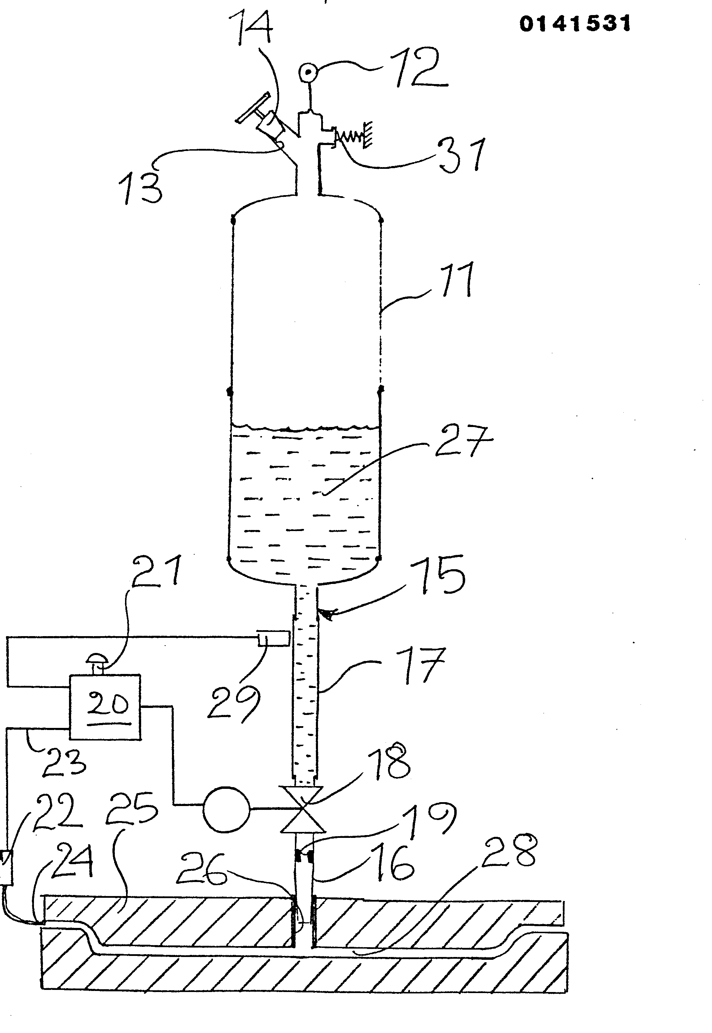

An exemplary embodiment of the invention will now be described with reference to the accompanying drawing which is a diagrammatic view of an injection moulding apparatus.

Air at a regulated pressure is fed to the interior of a cylinder 11 by way of inlet 12. Port 13 allows the interior of the cylinder 11 to be readily charged with resin mixture for injection or with solvent for cleaning as required. The port 13 is closed by a plug 14. A pressure relief valve 31 is provided at the upper end of the cylinder. The cylinder 11 has an outlet 15 with nozzle 16 at its outer end. The outlet includes a translucent pressure tube 17. The nozzle 16 is coupled to a flow control valve 18 and a flow restrictor 19 whose effect can be varied as required.

Operation of the valve 18 is governed by a compressed air regulator 20 which can be operated manually by plunger 21 but is intended for automatic control by means of an output signal from a sensor 22 fed to the regulator 20 by way of line 23. The sensor 22 acts to detect the presence or absence of material at the tip of probe 24. In the present example the probe 24 is positioned in a mould cavity at a point in mould 25 remote from a sprue 26 by means of which the mould 25 is filled from nozzle 15. The most suitable remote position may need to be determined by experiment to ensure that injection is not terminated by operation of the sensor until the mould is filled.

The apparatus is shown immediately prior to an injection step with the container 11 having been charged with a mixture 27 of resin, catalyst and such other additives as are necessary. The material is added by way of port 13 which is subsequently closed by plug 14. The interior of the container 11 is then pressurised by means of compressed air fed into the container 11 by way of inlet 12. With the nozzle 16 positioned in the sprue 26 valve 18 is opened to allow mixture to pass into mould cavity 28 of the mould 25. The use of air or other suitable inert gas to pressurise the interior of the container ensures a reasonable filling time. Once material impinges on the probe 24 the sensor acts to transmit a signal to regulator 20 to cause the valve 18 to close. Apart from reducing material wastage this serves to prevent the passage of air down the tube 17 into the mould with a consequent deletarious effect on the injected material.

The rapid response time of the sensor/valve combination enables accurately metered quantities of mixture to be used with minimum wastage.

Sensor 29 is positioned to detect a lack of material in the tube 17 to provide a valve closing signal. This can be in place of, or in combination with, the sensor 22 referred to above which operates on sensing the presence of material at a point remote from the sprue. In apparatus utilising both such sensors the output of each could be combined in a variety of ways to promote efficient and/or safe operation.

If necessary sufficient mixture can be added to the container to enable a number of moulds to be filled before replenishing the container 11. In this case a sensor disposed to detect a lack of material in the tube 17 would only operate in respect of the final injection or in the event of a break occuring in the flow of material along the tube 17.

Following the step of mixture injection a supply of solvent is added to the container 11 and the valve opened with the nozzle directed into a solvent collector. This ensures that the internals of the container 11, tube 17, valve 18 and nozzle 16 are cleared of residual mixture. It has been found that a charge of solvent can carry out a large number of separate cleaning cycles before it needs to be replaced with fresh solvent.

The translucent tube 17 allows the process of injection to be monitored visually and the geometry of the container 11 and tube 17 is designed to provide that the speed of the free surface of a charge of mixture when it passes down the tube at the end of the injection step is slow enough to enable an alert supervisor to stop injection manually by operating plunger 21. Such action could be required to cope with an emegency in a normally automatic injection sequence.

Typically in the course of operation the outputs could be compared at different stages to check that material is flowing as expected

Air operated sensor, regulator and valve arrangements are preferred.

CLAIMS

1    A method of injecting liquid resin into a mould by way of a nozzle (16) positioned to feed the mould (25) by way of a mould sprue (26) characterised by the steps of:

(i)    charging a pressurisible container (11) having an outlet nozzle (16) closed by a valve (18) with a given amount of a mixture of resin and such additives (such as catalyst) as may be required ;

(ii)    pressurising the interior of the charged container (11);

(iii)   disposing the charged container (11) so that the nozzle (16) is positioned to feed a mould cavity (28) by way of a mould sprue (26);

(iv)    causing the valve (18) to open to enable mixture to pass into the sprue (26) by way of the nozzle (16) under the action of a pressure differential existing between container interior and nozzle outlet; and

(v)    closing the valve (18) when the mixture is observed or otherwise detected as filling the mould (25).

2    A method as claimed in Claim 1 characterised in that the step of closing the valve (18) is achieved by:

(i)    positioning a mixture sensor (22) at a point in the mould (25) remote from the sprue (26); and

(ii)    feeding a signal output from the sensor (22) to a regulator (20) adapted to operate the valve (18) so as to cause closure of the valve when the sensor (22) detects the presence of mixture at the point in the mould (25) remote from the sprue (26).

3    A method as claimed in Claim 1 charaterised in that the step of closing the valve (18) is achieved by:

(i)    positioning a mixture sensor (29) at a point in the outlet (17) between the valve (18) and the container (11); and

(ii))    feeding a signal output from the sensor (29) to a regulator (20) adapted to operate the valve (18) so as to cause closure of the valve (18) when the sensor (29) detects the absence of mixture at the point in the nozzle (16) between the valve (18) and the container (11).

4    Apparatus for injecting liquid resin into a mould (25) by way of a nozzle (16) characterised by a pressurisble container (11), with pressurising inlet (12) for pressurising its interior in a controlled manner, having an outlet (17) equipped with the nozzle (16), the passage of mixture through the nozzle (16) being regulatable by way of a valve (18) positioned between the container (11) and the nozzle (16).

5     Apparatus as claimed in Claim 4 characterised by the provision of:

(i)    a sensor (22, 29) for mixture dispensed from the container (11);

(ii)   a regulator (20) for operating the valve (18) between open and closed positions; and

(iii) a signal transmitter linking the sensor (22, 29) to the regulator (20) whereby the regulator (20) is enabled to operate the valve (18) in dependence on the output of the sensor (22, 29).

6     Apparatus as claimed in Claim 4 or Claim 5 characterised in that the container (11), the regulator (20), the sensor (29) and the signal transmitter are incorporated into a single unit for operational use.